# EUROPEAN PATENT APPLICATION

(11) **EP 3 865 537 A1**
(43) Date of publication of application: **18.08.2021**
(21) Application number: 20156741.9
(22) Date of filing: 11.02.2020
(51) Int. Cl.: C08J 9/00, C08K 3/04, C08K 5/00, C08L 9/06

(54) **THERMALLY EXPANDABLE COMPOSITIONS COMPRISING EXPANDABLE GRAPHITE**

(71) Applicant: SIKA TECHNOLOGY AG, 6340 Baar (CH)
(72) Inventor: Yamada, Shunsuke, Chigasaki-shi, 253-0088 (JP)
(74) Representative: Sika Patent Attorneys

(57) **Abstract**

The invention is directed to a thermally expandable composition comprising at least one solid rubber, at least on tackifying resin, a vulcanization system, and a thermally expandable graphite. The invention is also directed to a welding sealer tape comprising a substrate layer composed of the thermally expandable composition, to a method for providing sealing, structural adhesion, baffling, or combination thereof to a structure of a manufactured article, to a baffle and/or reinforcing element comprising the thermally expandable composition, to a method for sealing, baffling and/or reinforcing a cavity or a hollow structure, and to use of a thermally expandable graphite as a blowing agent in a thermally expandable material.

## Description

### Technical field

The invention relates to thermally expandable compositions and use thereof for providing baffle and/or reinforcement elements and welding sealer tapes. Such elements are suitable for use in sealing, baffling, and/or reinforcing of hollow structures, for example cavities in a hollow structural part of an automotive vehicle, and bonding of metal surfaces separated by a gap from each other, respectively.

### Background of the invention

Manufactured products often contain orifices and cavities or other hollow parts that result from the manufacturing process and/or that are designed into the product for various purposes, such as weight reduction. Automotive vehicles, for example, include several such orifices and cavities throughout the vehicle, including in the vehicle's structural pillars and in the sheet metal of the vehicle doors. It is often desirable to seal such orifices and cavities to minimize noise, vibrations, fumes, dirt, water, humidity, and the like from passing from one area to another within the vehicle by means of sealing members built into the orifice or cavity
Elements used for sealing, baffling or reinforcing often consist of a carrier, made of plastic, metal, or another rigid material, and one or more layers of a thermoplastic material attached to it which is able to expand its volume when heat or another physical or chemical form of energy is applied, but they can also be entirely made of expandable material. Using an adequate design, it is possible to insert the baffle or reinforcement element into the hollow part of the structure during the manufacturing process but also to leave the inner walls of the structure still accessible (or the cavities passable) by for example a liquid. For example, during the manufacture process of a vehicle, the hollow parts of a metal frame can still be largely covered by an electro-coating ("e-coat") liquid while the baffle or reinforcement elements are already inserted, and afterwards during a heat treatment step, the expandable thermoplastic material of the baffle or reinforcement element expands to fill the cavities as intended.

Thermally expandable compositions are also used in applications, where portions of structures of manufactured articles, such as automotive vehicles, are bonded to each other by spot welding. In some applications, the structures are bonded to each other by welds, which extend through the adhesive material. The adhesive materials used in these applications are also known as "welding sealer tapes" or "weld-through tapes". In a typical welding application, the adhesive material is applied to a portion of a structure, which is subsequently welded to form a bond with a portion of another structure. The welding of the structures can be conducted using, for example, electric resistance welding. In a typical case, the adhesive material is positioned between first and second substrates to be welded to each other such that at least part of it is located between the electrodes. A weld is formed between a portion of the first and second substrate and through the expandable adhesive material. After the welding step, the adhesive material is activated to expand or to cure or both, which is typically conducted at elevated temperature during painting or e-coating (curing) processes.

Currently employed thermally expandable compositions, which are used for providing baffle and/or reinforcement elements and welding sealer tapes often comprise an elastomeric or a thermoplastic polymer matrix that can be crosslinked by using suitable curing agents and one or more blowing agents. Most widely used chemical blowing agents in thermally expandable compositions include azodicarbonamide (also called azodicarboxamide or azobisformamide) and 4,4'-oxydibenzenesulfonyl hydrazide (abbreviated OBSH). Under activation conditions, such as elevated temperature, curing of the crosslinkable network takes place, while simultaneously the blowing agent decomposes and releases gases. This leads to the above-mentioned volume expansion and the formation of a stable foam. One example of such a system is disclosed in DE 10 2011 080 223 A1.

One of the problems in connection with the established solutions described above is the fact that the most commonly used exothermic blowing agents, especially azodicarbonamide (ADCA), are increasingly facing regulatory problems regarding health and safety issues.

It is thus desirable to provide a thermally expandable composition that is suitable for providing baffle and/or reinforcement elements and welding sealer tapes and which composition overcomes the above discussed problems related to State-of-the-Art compositions.

### Summary of the invention

The object of the present invention is to provide a thermally expandable composition, which can be used for providing baffle and/or reinforcement elements and welding sealer tapes.

The subject of the present invention is a thermally expandable composition as defined in claim 1.

It was surprisingly found out that expandable graphite can be used to replace exothermic chemical blowing agents such as azocarbondiamide (ADCA) in a thermally expandable composition comprising a curable elastomeric polymer matrix.

One of the advantages of the thermally expandable composition of the present invention is that the expandable graphite simultaneously improves the flame retarding properties of the composition, which enables the use of the composition for providing welding sealer tapes. Furthermore, the expandable graphite can replace the use of the other blowing agents, such as ADCA, which are facing regulatory problems regarding health and safety issues.

Other subjects of the present invention are presented in other independent claims. Preferred aspects of the invention are presented in the dependent claims.

### Detailed description of the invention

The subject of the present invention is a thermally expandable composition comprising:
a) At least one solid rubber **R,**
b) At least one tackifying resin **TR,**
c) A vulcanization system **VS,** and
d) A thermally expandable graphite.

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "rubber" refers to any natural, synthetic, or modified high molecular weight polymer or combination of polymers, which is capable of recovering from large deformations, i.e. has elastic properties. Typical rubbers are capable of being elongated or deformed to at least 200% of their original dimension under an externally applied force, and will substantially resume the original dimensions, sustaining only small permanent set (typically no more than about 20%), after the external force is released. In particular, the term "rubber" designates rubbers that have not been chemically crosslinked. The term "chemically crosslinked" is understood to mean that the polymer chains forming the elastomer are inter-connected by a plurality of covalent bonds, which are mechanically and thermally stable.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight may be determined by gel permeation chromatography.

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1 %.

The term "softening point" refers to a temperature at which a compound softens in a rubber-like state, or a temperature at which the crystalline portion within the compound melts. The softening point can be determined by ring and ball measurement conducted according to DIN EN 1238:2011 standard.

The "amount or content of at least one component X" in a composition, for example "the amount of the at least one thermoplastic polymer" refers to the sum of the individual amounts of all thermoplastic polymers contained in the composition. Furthermore, in case the composition comprises 20 wt.-% of at least one thermoplastic polymer, the sum of the amounts of all thermoplastic polymers contained in the composition equals 20 wt.-%.

The term "room temperature" designates a temperature of 23°C.

The thermally expandable composition comprises a thermally expandable graphite.

The term "thermally expandable graphite" or "expandable graphite" refers in the present disclosure to an intercalating graphite compound obtained by treatment of crystalline graphite with intercalants, such as nitric acid, sulfuric acid, and potassium permanganate, which are incorporated between the parallel layers of carbon atoms. When a thermally expandable graphite is exposed to heat, the intercalant is transformed from a liquid or a solid phase to gas phase. The adjacent graphite layers are forced apart by the released gases, which results in expansion of the graphite material and in volumetric expansion of the thermally expandable composition. The thermally expandable graphite can thus be used as a thermally activated blowing agent to replace chemical blowing agents, such as azocarbondiamide (ADCA).

The preferred amount of the thermally expandable graphite depends mainly on the intended application of the thermally expandable composition. However, it has been found out that increasing the amount of the thermally expandable graphite over a certain limit does not result in increased volume expansion. Furthermore, using overly high amounts of the thermally expandable graphite may result in foams having an open cell structure and consequently, higher water absorption.

Preferably, the thermally expandable graphite is present in the thermally expandable composition in an amount of at least 0.5 wt.-%, more preferably at least 1.5 wt.-%, even more preferably at least 2.5 wt.-%, still more preferably at least 3.5 wt.-%, based on the total weight of the thermally expandable composition.

According to one or more embodiments, the thermally expandable graphite is present in the thermally expandable composition in an amount of 5 - 35 wt.-%, preferably 5 - 30 wt.-%, more preferably 7.5 - 30 wt.-%, even more preferably 7.5 - 25 wt.-%, based on the total weight of the thermally expandable composition. Thermally expandable compositions comprising the thermally expandable graphite in amount falling within the above-mentioned ranges have been found especially suitable for use in providing baffle and/or reinforcement elements.

According to one or more further embodiments, the thermally expandable graphite is present in the thermally expandable composition in an amount of 0.5 - 20 wt.-%, preferably 1.5 - 15 wt.-%, more preferably 2.5 - 12.5 wt.-%, even more preferably 2.5 - 10 wt.-%, based on the total weight of the thermally expandable composition. Thermally expandable compositions comprising the thermally expandable graphite in amount falling within the above-mentioned ranges have been found especially suitable for use in providing welding sealer tapes.

Even though some exothermic chemical blowing agents have been widely used in thermally expandable compositions, especially in automotive industry, they are not especially preferred for use in the thermally expandable composition of the present invention. Exothermic chemical blowing agents are not preferred since they have been found to have potential to trigger respiratory sensitivity, are generally not safe from a toxicological point of view or have a risk of explosion. Furthermore, by-products such as ammonia, formamide, formaldehyde or nitrosamines are released during decomposition of exothermic blowing agents and these substances have been classified as hazardous substances and their use is prohibited in the construction of automobiles.

According to one or more embodiments, the thermally expandable composition is essentially free of ADCA (azodicarbonamide) and OBSH (4,4'-oxybis(benzenesulfonic acid hydrazide), preferably essentially free of exothermic chemical blowing agents selected from the group consisting of ADCA, OBSH, DNPT (dinitroso pentamethylene tetramine), PTSS (p-toluenesulfonyl semicarbazide), BSH (benzene-4-sulfonyl hydrazide), TSH (4-toluenesulfonyl hydrazide), and 5-PT (5-phenyltetrazole). The expression "essentially free of" is understood to mean that the thermally expandable composition may contain only traces of the above listed compounds, such as less than 0.25 wt.-%, preferably less than 0.15 wt.-%, more preferably less than 0.05 wt.-%, still more preferably less than 0.01 wt.-%, based on the total weight of the thermally expandable composition.

According to one or more embodiments the thermally expandable composition if free of ADCA (azodicarbonamide) and OBSH (4,4'-oxybis(benzenesulfonic acid hydrazide), preferably free of exothermic blowing agents selected from the group consisting of ADCA, OBSH, DNPT (dinitroso pentamethylene tetramine), PTSS (p-toluenesulfonyl semicarbazide), BSH (benzene-4-sulfonyl hydrazide), TSH (4-toluenesulfonyl hydrazide), and 5-PT (5-phenyltetrazole). The term "free of" is understood to mean that the amount of above listed compounds is 0 wt.-%, based on the total weight of the thermally expandable composition.

According to one or more embodiments, the thermally expandable graphite is present in the thermally expandable composition in form of solid particles, wherein at least 50 %, preferably at least 60 %, more preferably at least 70 %, even more preferably at least 75 % of the particles have a particle size of greater than standard mesh size of 50 and/or not more than 20 %, preferably not more than 10 %, more preferably not more than 7.5 %, even more preferably not more than 5 % of the particles have a particle size of smaller than standard mesh size of 80.

The expression "having a particle size of greater than standard mesh size of 50" is understood to mean that the particles are not fine enough to pass through a sieve with an aperture size of 300 µm (standard US mesh size of 50) whereas the expression "having a particle size of smaller than standard mesh size of 80" is understood to mean that the particles are fine enough to pass through a sieve with an aperture size of 160 µm (standard US mesh size 80). The particle size distribution can be determined by sieve analysis according to the method as described in ASTM C136/C136M -2014 standard ("Standard Test Method for Sieve Analysis of Fine and Coarse Aggregates).

Preferably, the thermally expandable graphite has an initiation expansion temperature determined by using the method as described below of at or below 250°C, more preferably at or below 200°C, even more preferably at or below 185°C. According to one or more embodiments, the thermally expandable graphite has an initiation expansion temperature determined by using the method as described below in the range of 85 - 200°C, preferably 100 - 185°C, more preferably 100 - 175°C, such as 105 - 165°C, even more preferably 110 - 160°C, still more preferably 115 - 155°C.

### Measurement of initiation expansion temperature

A sample of thermally expandable graphite having a volume of 2 cm³ is placed in an oven in a test tube. The temperature of the oven is increased at a constant rate until the volume of the sample has increased to a value corresponding to 1.1 times the initial volume of the sample. The temperature at which the 10% increase in volume is reached is recorded as the "initiation expansion temperature".

Preferably, the thermally expandable graphite has an expansion degree at a temperature of 950°C determined by using the method as described below of at least 50 cm³/g, more preferably at least 75 cm³/g, even more preferably at least 100 cm³/g. According to one or more embodiments, the thermally expandable graphite has an expansion degree at a temperature of 950°C determined by using the method as described below in the range of 100 - 600 cm³/g, preferably 125 - 550 cm³/g, more preferably 150 - 500 cm³/g, even more preferably 200 - 450 cm³/g, still more preferably 200 - 400 cm³/g, such as 200 - 350 cm³/g.

### Measurement of expansion degree at 950°C

A 1g sample of the thermally expandable graphite is placed in a glass bottle and heated in an oven at a constant temperature of 950°C for a time period of 30 seconds. The glass bottle is then removed from the oven and the volume of the sample is measured and divided by the mass of the sample to obtain the expansion degree at 950°C.

The thermally expandable composition further comprises at least one solid rubber **R.** The term "solid rubber" designates in the present document rubbers that are solid at a temperature of 25°C. The amount of the solid rubber **R** in the thermally expandable composition is not subject to any particular restrictions. It is however preferred that the at least one solid rubber **R** is present in the thermally expandable composition in an amount of at least 1.5 wt.-%, more preferably at least 2.5 wt.-%, based on the total weight of the thermally expandable composition.

According to one or more embodiments, the at least one solid rubber **R** comprises 5 - 40 wt.-%, preferably 7.5 - 35 wt.-%, more preferably 10 - 30 wt.-%, even more preferably 12.5 - 30 wt.-%, still more preferably 12.5 - 25 wt.-% of the total weight of the thermally expandable composition.

The at least one solid rubber **R** is preferably selected from the group consisting of butyl rubber, halogenated butyl rubber, styrene-butadiene rubber (SBR), ethylene-propylene rubber (EPR), ethylene-propylene diene monomer rubber (EPDM), natural rubber, polychloroprene rubber, cis-1,4-polyisoprene, polybutadiene rubber, isoprene-butadiene rubber, styrene-isoprene-butadiene rubber, nitrile rubber, nitrile-butadiene rubber, and acrylonitrile rubber. According to one or more embodiments, the at least one solid rubber **R** is selected from the group consisting of butyl rubber, halogenated butyl rubber, styrene-butadiene rubber (SBR), ethylene-propylene rubber (EPR), ethylene-propylene diene monomer rubber (EPDM), natural rubber, cis-1,4-polyisoprene, and polybutadiene rubber.

Preferably, the at least one solid rubber **R** has an average molecular weight (Mₙ) of at least 100'000 g/mol, more preferably at least 125'000 g/mol and/or a Mooney viscosity (ML 1+4 at 100°C) of not more than 150 MU, more preferably not more than 125 MU, even more preferably not more than 100 MU. The term "Mooney viscosity" refers in the present disclosure to the viscosity measure of rubbers. It is defined as the shearing torque resisting rotation of a cylindrical metal disk (or rotor) embedded in rubber within a cylindrical cavity. The dimensions of the shearing disk viscometer, test temperatures, and procedures for determining Mooney viscosity are defined in ASTM D1646 -19a standard.

According to one or more embodiments, the at least one solid rubber **R** comprises at least one solid styrene-butadiene rubber **R1.** Generally, the expression "the at least one component X comprises at least one component XN", such as "the at least one solid rubber **R** comprises at least one solid styrene-butadiene rubber **R1"** is understood to mean in the context of the present disclosure that the thermally expandable composition comprises one or more solid styrene-butadiene rubbers **R1** as representatives of the at least one solid rubber **R.**

Preferably, the at least one solid styrene-butadiene rubber **R1** is an emulsion-polymerized styrene-butadiene rubber. These can be divided into two types, cold rubber and hot rubber depending on the emulsion polymerization temperature, but hot rubbers (hot type) are preferred.

Preferably, the at least one solid styrene-butadiene rubber **R1** has
- a styrene content of 1 - 60 wt.-%, preferably 5 - 50 wt.-%, more preferably 10 - 40 wt.-%, even more preferably 15 - 40 wt.-%, still more preferably 20 - 35 wt.-% and/or
- a Mooney viscosity (ML 1+4 at 100°C) in the range of 15 - 150 MU (Mooney units), preferably 20 -100 MU, more preferably 20 - 80 MU, even more preferably 25 - 60 MU.

Preferred solid styrene-butadiene rubbers **R1** include pre-crosslinked styrene-butadiene elastomers, which are commercially available, for example, under the trade name of Petroflex® SBR 1009A, 1009S and 1018 elastomers, manufactured by Petroflex/Lanxess, using either rosin or fatty acids soaps as emulsifier and coagulated by the salt-acid method, and SBR 1009, 1009A, 1502, 1507, and 4503 elastomers, manufactured by Lion Elastomers, by hot emulsion polymerization with divinylbenzene.

According to one or more embodiments, the at least one solid rubber **R** comprises at least one solid butyl rubber **R2.**

The term "butyl rubber" designates in the present document a polymer derived from a monomer mixture containing a major portion of a C₄ to C₇ monoolefin monomer, preferably an isoolefin monomer and a minor portion, such as not more than 30 wt.-%, of a C₄ to C₁₄ multiolefin monomer, preferably a conjugated diolefin.

The preferred C₄ to C₇ monoolefin monomer may be selected from the group consisting of isobutylene, 2-methyl-1-butene, 3-methyl-1-butene, 2-methyl-2-butene, 4-methyl-1-pentene, and mixtures thereof.

The preferred C₄ to C₁₄ multiolefin comprises a C₄ to C₁₀ conjugated diolefin. The preferred C₄ to C₁₀ conjugated diolefin may be selected from the group comprising isoprene, butadiene, 2,4-dimethylbutadiene, piperyline, 3-methyl-1,3-pentadiene, 2,4-hexadiene, 2-neopentyl-1,3-butadiene, 2-methyl-1,5-hexadiene, 2,5-dimethyl-2,4-hexadiene, 2-methyl-1,4-pentadiene, 2-methyl-1,6-heptadiene, cyclopentadiene, methylcyclopentadiene, cyclohexadiene, 1-vinyl-cyclohexadiene and mixtures thereof.

Preferably, the at least one solid butyl rubber **R2** is derived from a monomer mixture containing from about 80 wt.-% to about 99 wt.-% of a C₄ to C₇ monoolefin monomer and from about 1.0 wt.-% to about 20 wt.-% of a C₄ to C₁₄ multiolefin monomer. More preferably, the monomer mixture contains from about 85 wt.-% to about 99 wt.-% of a C₄ to C₇ monoolefin monomer and from about 1.0 wt.-% to about 10 wt.-% of a C₄ to C₁₄ multiolefin monomer. Most preferably, the monomer mixture contains from about 95 wt.-% to about 99 wt.-% of a C₄ to C₇ monoolefin monomer and from about 1.0 wt.-% to about 5.0 wt.-%of a C₄ to C₁₄ multiolefin monomer.

The most preferred at least one solid butyl rubber **R2** is derived from a monomer mixture comprising from about 97 wt.-% to about 99.5 wt.-% of isobutylene and from about 0.5 wt.-% to about 3 wt.-% of isoprene.

It is furthermore possible to include an optional third monomer to produce a butyl terpolymer. For example, it is possible to include a styrenic monomer in the monomer mixture, preferably in an amount up to about 15 wt.-% of the monomer mixture. The preferred styrenic monomer may be selected from the group comprising p-methylstyrene, styrene, α-methylstyrene, p-chlorostyrene, p-methoxystyrene, indene, indene derivatives and mixtures thereof. The most preferred styrenic monomer may be selected from the group comprising styrene, p-methylstyrene and mixtures thereof. Other suitable copolymerizable termonomers will be apparent to those of skill in the art.

According to one or more embodiments, the at least one solid butyl rubber R2 is a halogenated butyl rubber, preferably a chlorinated butyl rubber or a brominated butyl rubber, more preferably a brominated butyl rubber.

Preferred halogenated butyl rubbers comprise a halogen in an amount of at least 0.1 wt.-%, in particular 0.1 - 10.0 wt.-%, preferably 0.1 - 8.0 wt.-%, more preferably 0.5 - 8.0 wt.-%, even more preferably 0.5 - 4.0 wt.-%, still more preferably 1.5 - 3.0 wt.-%, based on the weight of the butyl rubber.

According to one or more embodiments, the at least one solid butyl rubber **R2** is a mixture of a solid halogenated butyl rubber and a solid non-halogenated butyl rubber, wherein the solid halogenated butyl rubber is preferably a brominated butyl rubber. Preferably, in these embodiments the weight ratio of the amount of the solid halogenated butyl rubber and the amount of the solid non-halogenated butyl rubber is in the range of 20 - 0.1, more preferably 15 - 0.5, even more preferably 12.5 - 1, most preferably 10 - 1.

According to one or more embodiments, the at least one solid rubber **R** comprises at least one solid polybutadiene rubber **R3.**

The term "polybutadiene rubber" designates in the present document a polymer obtained from the polymerization of the 1,3-butadiene monomer. A Preferred at least one solid polybutadiene rubber **R3** has a 1,4 cis-bond content of at least 40 wt.-%, more preferably greater than 80 wt.-%, even more preferably greater than 95 wt.-%.

According to one or more embodiments, the at least one solid polybutadiene rubber **R3** has a Mooney Viscosity (ML 1+4 at 100°C) of 15 - 150 MU (Mooney units), preferably 20 -100 MU, more preferably 20 - 80 MU, even more preferably 25 - 60 MU.

According to one or more embodiments, the at least one solid rubber **R** is selected from the group consisting of a solid styrene-butadiene rubber **R1,** a solid butyl rubber **R2,** and a solid polybutadiene rubber **R3.**

According to one or more embodiments, the at least one solid rubber **R** is composed of the at least one solid styrene-butadiene rubber **R1.**

According to one or more embodiments, the at least one solid rubber **R** is composed of the at least one solid butyl rubber **R2,** preferably of a solid halogenated butyl rubber or a mixture of a solid halogenated butyl rubber and a solid non-halogenated butyl rubber, wherein the solid halogenated butyl rubber is preferably a brominated butyl rubber.

According to one or more embodiments, the at least one solid rubber **R** is composed of the at least one solid polybutadiene rubber **R3.**

According to one or more preferred embodiments, the at least one solid rubber **R** comprises the at least one solid styrene-butadiene rubber **R1** and the at least one solid butyl rubber **R2,** wherein the ratio of the amount of the at least one solid styrene-butadiene rubber **R1** to the amount of the at least one solid butyl rubber **R2** is preferably in the range of 1:30 to 30:1, more preferably 1:1 to 30:1, even more preferably 5:1 to 25:1 and wherein the at least one solid butyl rubber **R2** is preferably a non-halogenated solid butyl rubber.

The thermally expandable composition further comprises at least one tackifying resin **TR.**

The term "tackifying resin" designates in the present disclosure resins that in general enhance the adhesion and/or tackiness of a composition. The term "tackiness" refers in the present document to the property of a substance of being sticky or adhesive by simple contact, which can be measured, for example, as a loop tack. Preferred tackifying resins are tackifying at a temperature of 25°C. Such tackifying resins **TR** lead to good adhesion on metal substrates, especially oiled metal substrates, both before and after foaming of the thermally expandable composition. Tackifying resins typically have a relatively low average molecular weight (Mₙ), such as not more than 5'000 g/mol, in particular not more than 3'500 g/mol, preferably not more than 3'000 g/mol.

Preferably, the at least one tackifying resin **TR** has
- a softening point measured by a Ring and Ball method according to DIN EN 1238:2011 in the range of 50 - 200°C, more preferably 65 - 175°C, even more preferably 70 - 165°C, still more preferably 75 - 150°C and/or
- an average molecular weight (Mₙ) in the range of 150 - 5'000 g/mol, more preferably 250 - 3'500 g/mol, even more preferably 350 - 2'500 g/mol and/or
- a glass transition temperature (T_{g}) determined by dynamical mechanical analysis (DMA) as the peak of the measured loss modulus (G") curve using an applied frequency of 1 Hz and a strain level of 0.1% of at or above 0°C, preferably at or above 15°C, more preferably at or above 25°C, even more preferably at or above 30°C, still more preferably at or above 35°C.

According to one or more embodiments, the at least one tackifying resin **TR** comprises 1.5 - 30 wt.-%, preferably 2.5 - 25 wt.-%, more preferably 5 - 25 wt.-%, even more preferably 7.5 - 20 wt.-%, still more preferably 10 - 20 wt.-% of the total weight of the thermally expandable composition.

Suitable resins to be used as the at least one tackifying resin **TR** include synthetic resins, natural resins, and chemically modified natural resins.

Examples of suitable natural resins and chemically modified natural resins include rosins, rosin esters, phenolic modified rosin esters, and terpene resins. The term "rosin" is to be understood to include gum rosin, wood rosin, tall oil rosin, distilled rosin, and modified rosins, for example dimerized, hydrogenated, maleated and/or polymerized versions of any of these rosins.

Suitable rosin esters to be used as the at least one tackifying resin **TR** can be obtained, for example, from reactions of rosins and polyhydric alcohol or polyol such as pentaerythritol, glycerol, dipentaerythritol, tripentaerythritol, trimethylol ethane, trimethylol propane, ethylene glycol, polyethylene glycol, 1,3-propanediol, 1,4-butanediol, 1,5-pentanediol, 1,6-hexanediol, trimethylene glycol, propylene glycol, neopentyl glycol, in the presence of acid or base catalyst.

Suitable terpene resins to be used as the at least one tackifying resin **TR** include copolymers and terpolymers of natural terpenes, such as styrene/terpene and alpha methyl styrene/terpene resins; polyterpene resins generally resulting from the polymerization of terpene hydrocarbons, such as the bicyclic monoterpene known as pinene, in the presence of Friedel-Crafts catalysts at moderately low temperatures; hydrogenated polyterpene resins; and phenolic modified terpene resins including hydrogenated derivatives thereof.

The term "synthetic resin" designates in the present document compounds obtained from the controlled chemical reactions such as polyaddition or polycondensation between well-defined reactants that do not themselves have the characteristic of resins. Monomers that may be polymerized to synthesize the synthetic resins may include aliphatic monomer, cycloaliphatic monomer, aromatic monomer, or mixtures thereof. Suitable aliphatic monomers may include C₄, C₅, and C₆ paraffins, olefins, and conjugated diolefins. Examples of aliphatic monomers or cycloaliphatic monomers include butadiene, isobutylene, 1,3-pentadiene, 1,4-pentadiene, cyclopentane, 1-pentene, 2-pentene, 2-methyl-1-pentene, 2-methyl-2-butene, 2-methyl-2-pentene, isoprene, cyclohexane, 1- 3-hexadiene, 1-4-hexadiene, cyclopentadiene, and dicyclopentadiene. Examples of aromatic monomer include C₈, C₉, and C₁₀ aromatic monomers. Typical aromatic monomers include, styrene, alphamethyl styrene, vinyl toluene, methoxy styrene, tertiary butyl styrene, chlorostyrene, coumarone, and indene monomers including indene, and methyl indene, and combinations thereof.

Suitable synthetic resins to be used as the at least one tackifying resin **TR** include, for example, hydrocarbon resins, coumarone-indene resins, polyindene resins, polystyrene resins, vinyl toluene-alphamethyl styrene copolymer resins, and alphamethyl styrene resins.

The term "hydrocarbon resin" designates in the present document synthetic resins made by polymerizing mixtures of unsaturated monomers obtained from petroleum based feedstocks, such as by-products of cracking of natural gas liquids, gas oil, or petroleum naphthas. These types of synthetic hydrocarbon resins are also known as "petroleum resins" or as "petroleum hydrocarbon resins". The hydrocarbon resins include also pure monomer aromatic resins, which are prepared by polymerizing aromatic monomer feedstocks that have been purified to eliminate color causing contaminants and to precisely control the composition of the product.

Examples of suitable hydrocarbon resins to be used as the at least one tackifying resin **TR** include C5 aliphatic resins, mixed C5/C9 aliphatic/aromatic resins, aromatic modified C5 aliphatic resins, cycloaliphatic resins, mixed C5 aliphatic/cycloaliphatic resins, mixed C9 aromatic/cycloaliphatic resins, mixed C5 aliphatic/cycloaliphatic/C9 aromatic resins, aromatic modified cycloaliphatic resins, C9 aromatic resins, as well hydrogenated versions of the aforementioned resins. The notations "C5" and "C9" indicate that the monomers from which the resins are made are predominantly hydrocarbons having 4-6 and 8-10 carbon atoms, respectively. The term "hydrogenated" includes fully, substantially and at least partially hydrogenated resins. Partially hydrogenated resins may have a hydrogenation level, for example, of 50%, 70%, or 90%.

Suitable hydrocarbon resins are commercially available, for example, under the trade name of Wingtack® series, Wingtack® Plus, Wingtack® Extra, and Wingtack® STS (all from Cray Valley); under the trade name of Escorez® 1000 series, Escorez® 2000 series, and Escorez® 5000 series (all from Exxon Mobile Chemical); under the trade name of Novares® T series, Novares® TT series, Novares® TD series, Novares® TL series, Novares® TN series, Novares® TK series, and Novares® TV series (all from RUTGERS Novares GmbH); and under the trade name of Kristalex®, Plastolyn®, Piccotex®, Piccolastic® and Endex® (all from Eastman Chemicals).

According to one or more embodiments, the at least one tackifying resin **TR** comprises at least one mixed C5/C9 aliphatic/aromatic hydrocarbon resin **TR1,** preferably having a softening point measured by a Ring and Ball method according to DIN EN 1238:2011 in the range of 65 - 175°C, more preferably 75 - 165°C, even more preferably 80 - 155°C, still more preferably 90 - 135°C.

According to one or more further embodiments, the at least one tackifying resin **TR** comprises at least one C5 aliphatic hydrocarbon resin **TR2,** preferably having a softening point measured by a Ring and Ball method according to DIN EN 1238:2011 in the range of 65 - 165°C, more preferably 75 - 135°C, even more preferably 80 - 125°C, still more preferably 90 - 110°C.

According to one or more embodiments, the at least one tackifying resin **TR** is composed of the at least one mixed C5/C9 aliphatic/aromatic hydrocarbon resin **TR1.**

According to one or more further embodiments, the at least one tackifying resin **TR** comprises both the at least one mixed C5/C9 aliphatic/aromatic hydrocarbon resin **TR1** and the at least one C5 aliphatic hydrocarbon resin **TR2,** wherein the weight ratio of the amount of the at least one mixed C5/C9 aliphatic/aromatic hydrocarbon resin **TR1** to the amount of the at least one C5 aliphatic hydrocarbon resin **TR2** is preferably in the range of 0.1 - 3, preferably 0.5 - 2.5, more preferably 0.5 - 2.

The thermally expandable composition further comprises a vulcanization system **VS.**

A large number of vulcanization systems based on elementary sulfur as well as vulcanization systems not containing elementary sulfur are suitable.

In case a vulcanization system based on elementary sulfur is used, the system preferably contains pulverulent sulfur, more preferably at least one sulfur compound selected from the group consisting of powdered sulfur, precipitated sulfur, high dispersion sulfur, surface-treated sulfur, and insoluble sulfur.

Preferred vulcanization systems based on elementary sulfur comprise 1 - 15 wt.-%, more preferably 5 - 10 wt.-% of pulverulent sulfur, preferably at least one sulfur compound selected from the group consisting of powdered sulfur, precipitated sulfur, high dispersion sulfur, surface-treated sulfur, and insoluble sulfur, based on the total weight of the vulcanization system.

According to one or more embodiments, the vulcanization system **VS** is a vulcanization system without elementary sulfur.

Preferred vulcanization systems without elementary sulfur comprise at least one vulcanization agent and optionally at least one organic vulcanization accelerator and/or at least one inorganic vulcanization accelerator.

Suitable vulcanization agents for vulcanization systems without elementary sulfur include, for example, organic peroxides, phenolic resins, bisazidoformates, polyfunctional amines, para-quinone dioxime, para-benzoquinone dioxime, para-quinone dioxime dibenzoate, p-nitrosobenzene, dinitrosobenzene, thiuram compounds, bismaleimides, dithiols, zinc oxide as well as vulcanization systems crosslinked with (blocked) diisocyanates.

Suitable organic vulcanization accelerators to be used in the vulcanization systems without elementary sulfur include thiocarbamates, dithiocarbamates (in the form of their ammonium or metal salts), xanthogenates, thiuram compounds (monosulfides and disulfides), thiazole compounds, aldehyde-amine accelerators, for example hexamethylenetetramine, and guanidine accelerators.

Suitable inorganic vulcanization accelerators to be used in the vulcanization systems without elementary sulfur include, for example, zinc compounds, in particular zinc salts of fatty acids, basic zinc carbonates, and zinc oxide.

According to one or more embodiments, the vulcanization system **VS** is a vulcanization system without elementary sulfur containing at least one vulcanization agent selected from the group consisting of para-quinone dioxime, para-benzoquinone dioxime, para-quinone dioxime dibenzoate, p-nitrosobenzene, dinitrosobenzene, and thiuram compounds, preferably from the group consisting of para-quinone dioxime, para-benzoquinone dioxime, para-quinone dioxime dibenzoate, tetramethyl thiuram disulfide (TMTD), and tetrabenzylthiuram disulfide (TBzTD), and preferably further containing at least one organic vulcanization accelerator and/or at least one an inorganic vulcanization accelerator.

Preferably, the at least one organic vulcanization accelerator is selected from the group consisting of cyclohexylbenzothiazole sulfonamide, mercaptobenzothiazole sulfide (MBTS), diphenyl guanidine, and zinc dimethyldithiocarbamate.

Preferably, the at least one inorganic vulcanization accelerator is selected from the group consisting of zinc salts of fatty acids, basic zinc carbonates, and zinc oxide, more preferably zinc oxide.

Preferably, the vulcanization system **VS** without elementary sulfur comprises 1 - 15 wt.-%, more preferably 1 - 12.5 wt.-%, even more preferably 2 - 10 wt.-%, most preferably 3.5 - 10 wt.-% of the total weight of the thermally expandable composition.

According to one or more preferred embodiments, the vulcanization system **VS** without elementary sulfur comprises 10 - 40 wt.-%, preferably 20 - 35 wt.-% of at least one vulcanization agent, preferably selected from the group consisting of para-quinone dioxime, para-benzoquinone dioxime, para-quinone dioxime dibenzoate, tetramethyl thiuram disulfide (TMTD), and tetrabenzylthiuram disulfide (TBzTD), and 10 - 40 wt.-%, preferably 20 - 35 wt.-% of at least one organic vulcanization accelerator, preferably selected from the group consisting of cyclohexylbenzothiazole sulfonamide, mercaptobenzothiazole sulfide (MBTS), diphenyl guanidine, and zinc dimethyldithiocarbamate and/or 10 - 40 wt.-%, preferably 20 - 35 wt.-% of at least one inorganic vulcanization accelerator, preferably selected from the group consisting of zinc salts of fatty acids, basic zinc carbonates, and zinc oxide, more preferably zinc oxide, all the proportions being based on total weight of the vulcanization system **VS.**

According to one or more embodiments, the thermally expandable composition further comprises at least one plasticizer **PL,** preferably selected from the group consisting of process oils and liquid polyolefin resins.

Preferably, the at least one plasticizer **PL,** if used, is present in the thermally expandable composition in an amount of not more than 35 wt.-%, preferably not more than 30 wt.-%, based on the total weight of the thermally expandable composition.

According to one or more embodiments, the at least one plasticizer **PL** comprises 1.5 - 30 wt.-%, more preferably 2.5 - 25 wt.-%, even more preferably 5 - 25 wt.-%, still more preferably 10 - 20 wt.-% of the total weight of the thermally expandable composition.

Suitable process oils to be used as the at least one plasticizer **PL** include mineral oils and synthetic oils. The term "mineral oil" refers in the present disclosure hydrocarbon liquids of lubricating viscosity (i.e., a kinematic viscosity at 100°C of 1 cSt or more) derived from petroleum crude oil and subjected to one or more refining and/or hydroprocessing steps, such as fractionation, hydrocracking, dewaxing, isomerization, and hydrofinishing, to purify and chemically modify the components to achieve a final set of properties. In particular, the term "mineral" refers in the present disclosure to refined mineral oils, which can be also characterized as Group I-III base oils according the classification of the American Petroleum Institute (API).

Suitable mineral oils to be used as the at least one plasticizer **PL** include paraffinic, naphthenic, and aromatic mineral oils. Particularly suitable mineral oils include paraffinic and naphtenic oils containing relatively low amounts of aromatic moieties, such as not more than 25 wt.-%, preferably not more than 15 wt.-%, based on the total weight of the mineral oil.

The term "synthetic oil" refers in the present disclosure to full synthetic (polyalphaolefin) oils, which are also known as Group IV base oils according to the classification of the American Petroleum Institute (API). Suitable synthetic oils are produced from liquid polyalphaolefins (PAOs) obtained by polymerizing α-olefins in the presence of a polymerization catalyst, such as a Friedel-Crafts catalyst. In general, liquid PAOs are high purity hydrocarbons with a paraffinic structure and high degree of side-chain branching. Particularly suitable synthetic oils include those obtained from so-called Gas-To-Liquids processes.

According to one or more embodiments, the at least one plasticizer **PL** comprises at least one process oil **PL1,** preferably selected from the group consisting of naphtenic and paraffinic mineral oils.

The term "liquid resin" refers in the present disclosure to a resin that flows at normal room temperature, has a pour point of less than 20 °C and/or a kinematic viscosity at 25°C of 50'000 cSt or less.

Suitable liquid polyolefin resins to be used as the at least one plasticizer **PL** include, for example, liquid polybutene and liquid polyisobutylene (PIB). The term "liquid polybutene" refers in the present disclosure to low molecular weight olefin oligomers comprising isobutylene and/or 1-butene and/or 2-butene. The ratio of the C₄-olefin isomers can vary by manufacturer and by grade. When the C4-olefin is exclusively 1-butene, the material is referred to as "poly-n-butene" or "PNB". The term "liquid polyisobutylene" refers in the present document to low molecular weight olefin oligomers of isobutylene, preferably containing at least 75 wt.-%, more preferably at least 85 wt.-% of repeat units derived from isobutylene. Suitable liquid polybutenes and polyisobutylenes have an average molecular weight (Mₙ) of less than 10'000 g/mol, preferably less than 7'500 g/mol, more preferably less than 5'000 g/mol, even more preferably less than 3'500 g/mol, still more preferably less than 2'500 g/mol.

Suitable liquid polybutenes and polyisobutylenes are commercially available, for example, under the trade name of Indopol®, such as Indopol® H-300 and Indopol® H-1200 (from Ineos); under the trade name of Glissopal® , such as Glissopal® V230, Glissopal® V500, and Glissopal® V700 (from BASF); under the trade name of Dynapak®, such as Dynapak® poly 230 (from Univar GmbH, Germany); and under the trade name of Daelim®, such as Daelim® PB 950 (from Daelim Industrial).

According to one or more embodiments, the at least one plasticizer **PL** comprises a liquid polyolefin resin **PL2,** preferably selected from the group consisting of liquid polybutene and liquid polyisobutylene, preferably having
- an average molecular weight (Mₙ) of 150 - 5'000 g/mol, preferably 250 - 3'500 g/mol, more preferably 350 - 2'500 g/mol and/or
- a pour point determined according to ISO 3016 in the range of -10 to +15°C, in particular from -10 to +10°C and/or
- a polydispersity index (M_{w}/Mₙ), determined by GPC, of not more than 5, preferably in the range of 0.5 - 5.0, more preferably 1.0 - 4.5, even more preferably 1.0 - 3.5.

According to one or more embodiments, the thermally expandable composition further comprises at least one solid particulate filler **F,** preferably selected from the group consisting of ground or precipitated calcium carbonate, lime, calcium-magnesium carbonate, talcum, gypsum, barite, pyrogenic or precipitated silica, silicates, mica, wollastonite, kaolin, feldspar, chlorite, bentonite, montmorillonite, dolomite, quartz, cristobalite, calcium oxide, aluminum hydroxide, magnesium oxide, hollow ceramic spheres, hollow glass spheres, hollow organic spheres, glass spheres, functionalized alumoxanes, and carbon black. Preferred solid particulate fillers include both organically coated and also uncoated commercially available forms of the fillers included in the above presented list.

The at least one solid particulate filler **F** is preferably present in the thermally expandable composition in the form of finely divided particles. The term "finely divided particles" refers to particles, whose median particle size dso does not exceed 500 µm, preferably 350 µm, more preferably 150 µm. The term "median particle size dso" refers in the present disclosure to a particle size below which 50 % of all particles by volume are smaller than the dso value.

According to one or more embodiments, the at least one solid particulate filler **F** has a median particle size dso in the range of 0.5 - 150 µm, preferably 1 - 100 µm, more preferably 1 - 50 µm, even more preferably 1 - 25 µm, still more preferably 1 - 10 µm.

According to one or more embodiments, the at least one solid particulate filler **F** comprises at least one mineral filler selected from the list consisting of ground or precipitated calcium carbonate, lime, calcium-magnesium carbonate, talcum, gypsum, graphite, barite, silica, silicates, mica, wollastonite, and carbon black.

According to one or more embodiments, the at least one solid particulate filler **F** comprises 5 - 50 wt.-%, preferably 10 - 45 wt.-%, more preferably 12.5 - 40 wt.-%, even more preferably 15 - 35 wt.-% of the total weight of the thermally expandable composition.

According to one or more embodiments, the thermally expandable composition further comprises at least one flame retardant **FR.**

Suitable flame retardants include, for example, melamine derivatives, phosphates, pyrophosphates, polyphosphates, organic and inorganic phosphinates, organic and inorganic phosphonates, and derivatives of the aforementioned compounds.

Preferred flame retardants include non-halogen phosphates and non-halogen polyphosphates, for example, trimethyl phosphate, triethyl phosphate, ethylenediamine phosphate, di-melamine orthophosphate, di-melamine pyrophosphate, triphenyl phosphate, trixylenyl phosphate, cresyl triphenyl phosphate, diphenylcresyl phosphate, piperazine phosphate, ammonium polyphosphate, ammonium polyphosphate particles coated with melamine, melamine polyphosphate, polyphosphates of 1,3,5-triazine compounds, and piperazine polyphosphate.

According to one or more embodiments, the at least one flame retardant **FR** comprises or consists of at least one non-halogen phosphate **FR1,** preferably selected from the group consisting of trimethyl phosphate, triethyl phosphate, ethylenediamine phosphate, triphenyl phosphate, trixylenyl phosphate, cresyl triphenyl phosphate, and diphenylcresyl phosphate.

According to one or more embodiments, the at least one flame retardant **FR** comprises or consists of at least one non-halogen polyphosphate **FR2,** preferably selected from the group consisting of ammonium polyphosphate, ammonium polyphosphate particles coated with melamine, melamine polyphosphate, polyphosphates of 1,3,5-triazine compounds, and piperazine polyphosphate.

According to one or more embodiments, the thermally expandable composition after curing has a volume increase compared to the uncured composition of not more than 1500 %, preferably not more than 1000 %, more preferably not more than 750 %, whereby the volume increase is determined using the DIN EN ISO 1183 method of density measurement (Archimedes principle) in deionised water in combination with sample mass determined by a precision balance.

According to one or more embodiments, the thermally expandable composition after curing has a volume increase compared to the uncured composition in the range of 25 - 1000%, preferably 50 - 750%, more preferably 75 - 500%, even more preferably 100 - 500%.

The preferences given above for the at least one solid rubber **R,** the at least one tackifying resin **TR,** the vulcanization system **VS,** the expandable graphite, the at least one plasticizer **PL,** the at least one solid particulate filler **F,** and the at least one flame retardant **FR** apply equally for all subjects of the present invention unless stated otherwise.

The thermally expandable compositions according to the present invention can be produced by mixing the components in any suitable mixing apparatus, for example in a dispersion mixer, planetary mixer, double screw mixer, continuous mixer, extruder, or dual screw extruder.

Preferably, the at least one solid rubber **R** and the at least one plasticizer **PL,** if used, are mixed in a separate step using a kneader, preferably a sigma blade kneader until a homogenous mixture is obtained. This homogenous mixture is then preferably mixed with the remaining components of the thermally expandable composition in the suitable mixing apparatus mentioned above.

It may be advantageous to heat the components before or during mixing, either by applying external heat sources or by friction generated by the mixing process itself, in order to facilitate processing of the components into a homogeneous mixture by decreasing viscosities and/or melting of individual components. However, care must be taken, for example by temperature monitoring and use of cooling devices where appropriate, that the activation temperatures of the expandable graphite and vulcanization system **VS** are not exceeded during the mixing process.

The thermally expandable compositions according to the present invention obtained by using the process as described above are storage stable at normal storage conditions. The term "storage stable" refers in the present disclosure to materials, which can be stored at specified storage conditions for long periods of time, such as at least one month, in particular at least 3 months, without any significant changes in the application properties of the material. The "typical storage conditions" refer here to temperatures of not more than 60°C, in particular not more than 50°C.

Another subject of the present invention is a welding sealer tape comprising a substrate layer composed of the thermally expandable composition according to the present invention.

The term "layer" refers in the present disclosure to sheet-like elements having first and second major surfaces defining a thickness there between and having a length and/or width at least 5 times, preferably at least 10 times, more preferably at least 15 times greater than the thickness of the element. Preferably, the substrate layer has a thickness of not more than 10 mm, more preferably not more than 7.5 mm, even more preferably not more than 5 mm.

According to one or more embodiments, the substrate layer of the thermally expandable composition in the welding sealer tape has
- a thickness in the range of 0.1 - 5 mm, preferably 0.25 - 3.5 mm, more preferably 0.5 - 3.0 mm, even more preferably 0.75 - 2.5 and/or
- a width in the range of 5 - 350 mm, preferably 5 - 250 mm, more preferably 10 - 200 mm, even more preferably 10- 150 mm.

According to one or more embodiments, the welding sealer tape further comprises a handling layer covering at least a portion, preferably substantially the whole area of the first and/or second major surface of the substrate layer. According to one or more embodiments, the handling layer is composed of a thermoplastic polymer composition having a softening point measured by Ring and Ball method conducted according to DIN EN 1238:2011 standard of 45 - 200°C, preferably 55 - 160°C, more preferably 65 - 125°C.

Preferably, the outwardly facing surface of the handling layer on the side opposite to the side of the substrate layer is non-tacky at normal room temperature. Whether a surface of a specimen is tacky or not can be determined by pressing the surface with the thumb at a pressure of about 5 kg for 1 second and then trying to lift the specimen by raising the hand. In case the thumb does not remain adhered to the surface and the specimen cannot be raised up, the surface is considered to be non-tacky.

The welding sealer tapes according to the present invention can produced, for example, by injection molding, punching or stamping, extrusion, calendering, or hot-pressing of the thermally expandable composition.

Another subject of the present invention is a method for providing sealing, structural adhesion, baffling, or combination thereof to a structure of a manufactured article, preferably an automotive vehicle, the method comprising steps of:
i) Providing a welding sealer tape according to the present invention between a first member and a second member of the structure, both first and second members having outwardly and inwardly facing surfaces,
ii) Forming a weld connecting the first member to the second member such that at least a portion of the thermally expandable composition is displaced, and
iii) Activating the thermally expandable composition such that the composition cures and/or expands.

The weld connecting the first and second members can be formed using any suitable welding techniques, such as electrical resistance welding or spot welding.

According to one or more embodiments, step ii) comprises steps of:
i') Contacting the outwardly facing surface of the first member with a first electrode and contacting the outwardly facing surface of the second member with a second electrode and
ii') Inducing an electric current to flow between the first and second electrodes to form a weld connecting the first and second members.

Preferably, the first and second electrodes are contacted with the respective outwardly facing surfaces of the first and second members such that at least a portion of the first member and at least a portion of the second member are located between the electrodes.

In a typical weld operation, the electrodes and consequently the portions of the members are then moved towards each other, which results in partial displacement of the thermally expandable material. The electrodes can be moved until the portions of the members contact each other or until the distance between the portions is small enough for forming a weld. Electrical current is then induced between the electrodes, which results in formation of one or more welds between the first and second member. The resulting weld(s) is typically at least partially surrounded by the thermally expandable composition.

The thermally expandable material can be activated to cure and/or expand before, during, or after the welding operation. Preferably, the thermally expandable material is activated after the welding operation, i.e. after the step ii) of the method has been conducted. When the structure is part of an automotive vehicle, the activation of the thermally expandable material can be conducted during a paint or coating process, such as e-coating (curing) process.

According to one or more embodiments, the thermally expandable composition of the substrate layer of the welding sealer tape, upon activation, has a volume increase compared to its original unexpanded volume of 25 - 500%, preferably 50 - 400%, more preferably 75 - 350%, even more preferably 95 - 350%, whereby the volume increase is determined using the DIN EN ISO 1183 method of density measurement (Archimedes principle) in deionised water in combination with sample mass determined by a precision balance.

Another subject of the present invention is a baffle and/or reinforcement element for open or hollow structures, wherein the element comprises the thermally expandable composition according to the present invention.

According to one or more embodiments, the thermally expandable composition of the baffle and/or reinforcement element has a sheet-like structure, preferably having
- a thickness in the range of 0.5 - 10 mm, preferably 1 - 7.5 mm, more preferably 1 - 6 mm and/or
- a width in the range of 1 - 30 cm, preferably 2 - 20 cm, more preferably 2 - 15 cm and/or
- a length in the range of 5 - 30 cm, preferably 10 - 30 cm, more preferably 10 - 25 cm.

According to one or more further embodiments, the baffle and/or reinforcement element further comprises a carrier on which the thermally expansible composition is deposited or attached. Such a design may be more cost-efficient, and it may facilitate fixation of the baffle and/or reinforcement element on the walls of the structure to be baffled and/or reinforced, for example by incorporation of pins, bolts, or hooks on the carrier element. Furthermore, with a suitable design of the carrier element, the mechanical performance and stability of the baffle and/or reinforcement element can be improved.

The carrier of the baffle and/or reinforcement element, if used, may consist of any material that can be processed into a shape. Preferred materials for the carrier include polymeric materials, such as a plastic, elastomers, thermoplastics, and blends thereof. Preferred thermoplastic materials include, without limitation, polymers such as polyurethanes, polyamides, polyesters, polyolefins, polysulfones, polyethylene terephthalates (PET), polyvinylchlorides (PVC), and chlorinated polyolefins. Especially preferred are high-temperature stable polymers such as poly(phenyl ethers), polysulfones, polyethersulfones, polyamides, in particular polyamide 6, polyamide 6,6, polyamide 11, polyamide 12, and mixtures thereof. Other suitable materials for the carrier include metals, especially aluminum or steel, or naturally grown, organic materials, such as wood or other (pressed) fibrous materials. Also, glassy or ceramic materials can be used. It is also possible to use any combination of such materials. It is also contemplated that such materials can be filled, for example, with fibers, minerals, clays, silicates, carbonates, combinations thereof, or be foamed.

The carrier can further exhibit any shape or geometry. It can also consist of several, not directly connected parts. For example, it can be massive, hollow, or foamed, or it can exhibit a grid-like structure. The surface of the carrier element can typically be smooth, rough, or structured, according to the intended use of the baffle and/or reinforcement element.

The baffle and/or reinforcing elements according to the present invention can produced, for example, by injection molding, punching or stamping, extrusion, calendering, or hot-pressing of the thermally expandable composition.

In case the baffle and/or reinforcement element comprises a carrier, the baffle and/or reinforcement element can be produced, for example, by a process, in which the thermally expandable composition is injection-molded onto a carrier or co-extruded with a carrier. The details of the manufacturing process of a baffle and/or reinforcement element comprising a carrier depend largely on the material of the carrier. If the material of the carrier can be (injection-) molded or extruded, the baffle and/or reinforcement element can be produced in a two-step injection-molding process or by co-extruding the carrier and the thermally expandable composition.

Another subject of the present invention is a method for sealing, baffling and/or reinforcing a cavity or hollow structure, wherein a baffle and/or reinforcing element according to the present invention is introduced into said cavity or hollow structure and subsequently thermally expanded such that said cavity or hollow structure is at least partially filled by the expanded composition.

The temperature of the thermal expansion step is preferably 100 - 250°C, more preferably of 100 - 200°C, even more preferably 110 - 200°C, still more preferably 110 - 185°C. Preferred duration of the thermal expansion step, i.e. preferred baking time of the thermally expandable composition, is 5 - 90 min, more preferably 10 - 60 min, even more preferably 10 - 30 min.

According to one or more embodiments, the thermally expandable composition of the baffle and/or reinforcing element, upon activation, has a volume increase compared to its original unexpanded volume of 25 - 2000%, preferably 50 - 1500%, more preferably 75 - 1000%, even more preferably 100 - 750%, whereby the volume increase is determined using the DIN EN ISO 1183 method of density measurement (Archimedes principle) in deionised water in combination with sample mass determined by a precision balance.

Still another subject of the present invention is a use of a thermally expandable graphite as a blowing agent in a thermally expandable material.

According to one or more embodiments, the thermally expandable graphite comprises 0.5 - 35 wt.-% wt.-%, preferably 1.5 - 30 wt.-%, more preferably 2.5 - 25 wt.-%, even more preferably 5 - 25 wt.-% of the total weight of the thermally expandable material.

According to one or more embodiments, the thermally expandable graphite is present in the thermally expandable material in form of solid particles, wherein at least 50%, preferably at least 60%, more preferably at least 70%, even more preferably at least 75% of the particles have a particle size of greater than standard mesh size of 50 and/or not more than 20%, preferably not more than 10%, more preferably not more than 7.5%, even more preferably not more than 5% of the particles have a particle size of smaller than standard mesh size of 80.

Preferably, the thermally expandable graphite has an initiation expansion temperature determined by using the method as described above of at or below 250°C, more preferably at or below 200°C, even more preferably at or below 185°C. According to one or more embodiments, the thermally expandable graphite has an initiation expansion temperature determined by using the method as described above in the range of 85 - 200°C, preferably 100 - 185°C, more preferably 100 - 175°C, such as 105 - 165°C, even more preferably 110 - 160°C, still more preferably 115 - 155°C.

Preferably, the thermally expandable graphite has an expansion degree at a temperature of 950°C determined by using the method as described above of at least 50 cm³/g, more preferably at least 75 cm³/g, even more preferably at least 100 cm³/g. According to one or more embodiments, the thermally expandable graphite has an expansion degree at a temperature of 950 °C determined by using the method as described above in the range of 100 - 600 cm³/g, preferably 125 - 550 cm³/g, more preferably 150 - 500 cm³/g, even more preferably 200 - 450 cm³/g, still more preferably 200 - 400 cm³/g, such as 200 - 350 cm³/g.

According to one or more embodiments, the thermally expandable material comprises at least one solid rubber, at least one tackifying resin, and a curing system, wherein
- the at least one solid rubber preferably comprises 5 - 40 wt.-%, more preferably 7.5 - 35 wt.-%, even more preferably 10 - 30 wt.-%, still more preferably 12.5 - 30 wt.-%, such as 12.5 - 25 wt.-% of the total weight of the thermally expandable material and/or
- the at least one tackifying resin preferably comprises 0.5 - 30 wt.-%, more preferably 2.5 - 25 wt.-%, even more preferably 5 - 25 wt.-%, still more
preferably 7.5 - 20 wt.-%, such as 10 - 20 wt.-% of the total weight of the thermally expandable material.

According to one or more embodiments, the curing system is a vulcanization system without elementary sulfur, preferably containing at least one vulcanization agent selected from the group consisting of para-quinone dioxime, para-benzoquinone dioxime, para-quinone dioxime dibenzoate, p-nitrosobenzene, dinitrosobenzene, and thiuram compounds, preferably from the group consisting of para-quinone dioxime, para-benzoquinone dioxime, para-quinone dioxime dibenzoate, tetramethyl thiuram disulfide (TMTD), and tetrabenzylthiuram disulfide (TBzTD) and optionally at least one organic vulcanization accelerator and/or at least one inorganic vulcanization accelerator.

According to one or more embodiments, the at least one solid rubber, the at least one tackifying resin, and the curing system are the at least one solid rubber **R,** the at least one tackifying resin **TR,** and the vulcanization system **VS** as discussed above.

### Examples

The followings chemicals shown in Table 1 were used in formulating the thermally expandable compositions.

**Table 1**

| | |
|---|---|
| *Solid rubber R* | Styrene-butadiene rubber, Mooney viscosity 30-40 MU (ML (1+4) 100 °C), styrene content ca. 23 wt.-% |
| *Tackifying resin TR* | C5 aliphatic hydrocarbon resin, softening point 90-110 °C (ASTM E 28) |
| *Plasticizer PL* | Naphtenic oil |
| *Filler F1* | Grinded calcium carbonate, dso particle size 2-10 µm |
| *Filler F2* | Talc, dso particle size 10-20 µm |
| *Flame retardant FR* | Cresyl diphenyl phosphate (CDP) |
| *EXP-1* | Expandable graphite, initiation expansion temperature 120 °C, expansion degree at 950 °C 200-250 cm³/g, +50 Mesh fraction ca. 80 %* |
| *EXP-2* | Expandable graphite, initiation expansion temperature 150 °C, expansion degree at 950 °C 250-300 cm³/g, +50 Mesh fraction ca. 80 %* |
| *EXP-3* | Expandable graphite, initiation expansion temperature 200 °C, expansion degree at 950 °C 300-350 cm³/g, +50 Mesh fraction ca. 70 %* |
| *Accelerator 1* | Zinc oxide |
| *Vulcanization agent* | Tetramethyl thiuram disulfide (TMTD) |
| *Accelerator2* | Mercaptobenzothiazole sulfide (MBTS) |
| *Urea* | Urea |
| *ADCA* | Azodicarbonamide |

| | |
|---|---|
| * fraction of particles having a size greater than 50 standard (US) mesh size | |

### Preparation of the thermally expandable compositions

All inventive (Ex-1 to Ex-6) and non-inventive (Ref-1 to Ref-3) formulations having the compositions as shown in Tables 2 and 3 were prepared according to the following procedure.

In a first step, the solid rubber SBR was mixed in a sigma blade kneader for 15 min. After that, the plasticizer was added constantly over a time of 5 hours.

After this, the obtained mixture and all the remaining components were added into a speed mixer (total weight of the final composition approximately 300 g) and mixed during 3 min. The mixed compositions were then stored in sealed cartridges.

The compositions presented in Table 2 are more suitable for use in baffling applications whereas the compositions presented in Table 3 are more suitable for use in welding sealing applications.

### Volume expansion

The tested formulations were first shaped into form of strips having dimensions 25 x 25 x 2 mm (length x width x thickness) and then baked at 160°C, 180°C, 200°C, and 220°C for 20 or 25 minutes. The volume expansion in percentage was then calculated as: (V_{after} - V_{before})/V_{before}. The volumes of the strips before and after the baking process were determined based on density measurements. The densities of the strips were measured according to DIN EN ISO 1183 standard using the water immersion method (Archimedes principle) in deionized water and a precision balance to measure the mass.

**Table 2**

| **Composition [wt.-%]** | **Ref-1** | **Ex-1** | **Ex-2** | **Ex-3** | **Ex-4** |
|---|---|---|---|---|---|
| *Solid rubber R* | 25.00 | 25.00 | 25.00 | 25.00 | 25.00 |
| *Tackifying resin TR* | 10.00 | 10.00 | 10.00 | 10.00 | 10.00 |
| *Plasticizer PL* | 20.00 | 20.00 | 20.00 | 20.00 | 20.00 |
| *Filler F1* | 30.00 | 30.00 | 30.00 | 30.00 | 20.00 |
| *EXP-1* | - | - | 8.00 | - | - |
| *EXP-2* | - | - | - | 8.00 | 18.00 |
| *EXP-3* | - | 8.00 | - | - | - |
| *Accelerator 1* | 3.00 | 3.00 | 3.00 | 3.00 | 3.00 |
| *Vulcanization agent* | 2.50 | 2.50 | 2.50 | 2.50 | 2.50 |
| *Accelerator2* | 1.50 | 1.50 | 1.50 | 1.50 | 1.50 |
| *Urea* | 4.00 | - | - | - | - |
| *ADCA* | 4.00 | - | - | - | - |
| Total | 100.00 | 100.00 | 100.00 | 100.00 | 100.00 |

| **Expansion properties** | | | | | |
|---|---|---|---|---|---|
| Volume exp 160 °C, 20 min | 657 | 55 | 103 | 77 | 122 |
| Volume exp 180 °C, 20 min | 701 | 111 | 145 | 134 | 164 |
| Volume exp 200 °C, 20 min | 544 | 157 | 196 | 160 | 237 |
| Volume exp 220 °C, 20 min | 347 | 134 | 198 | 196 | 411 |

**Table 3**

| **Composition [wt.-%]** | **Ref-2** | **Ref-3** | **Ex-5** | **Ex-6** |
|---|---|---|---|---|
| Solid rubber R | 25.00 | 25.00 | 25.00 | 25.00 |
| Tackifying resin TR | 15.00 | 15.00 | 15.00 | 15.00 |
| Plasticizer PL | 15.00 | 15.00 | 15.00 | 20.00 |
| Filler F1 | 15.00 | 15.00 | 15.00 | 15.00 |
| Filler F2 | 10.00 | 11.50 | 10.00 | 12.50 |
| Flame retardant FR | 10.00 | 10.00 | 10.00 | 0.00 |
| EXP-2 | - | - | 2.50 | 5.00 |
| Accelerator 1 | 3.00 | 3.00 | 3.00 | 3.00 |
| Vulcanization agent | 2.50 | 2.50 | 2.50 | 2.50 |
| Accelerator2 | 2.00 | 2.00 | 2.00 | 2.00 |
| Urea | 1.00 | 0.50 | - | - |
| ADCA | 1.50 | 0.50 | - | - |
| Total | 100.00 | 100.00 | 100.00 | 100.00 |

| **Expansion properties** | | | | |
|---|---|---|---|---|
| Volume exp 160 °C, 20 min | 364 | 175 | 46 | 68 |
| Volume exp 180 °C, 20 min | 474 | 194 | 121 | 142 |
| Volume exp 200 °C, 20 min | 477 | 281 | 140 | 163 |
| Volume exp 220 °C, 20 min | 364 | 175 | 46 | 68 |

## Claims

1. A thermally expandable composition comprising:
a) At least one solid rubber **R,**
b) At least one tackifying resin **TR,**
c) A vulcanization system **VS,** and
d) A thermally expandable graphite.

2. The thermally expandable composition according to claim 1, wherein the thermally expandable graphite is present in the thermally expandable composition in an amount of at least 0.5 wt.-%, more preferably at least 1.5 wt.-%, based on the total weight of the thermally expandable composition.

3. The thermally expandable composition according to claim 1 or 2, wherein the composition is essentially free of azodicarbonamide (ADCA) and 4,4'-oxybis(benzenesulfonic acid hydrazide (OBSH).

4. The thermally expandable composition according to any one of previous claims, wherein the thermally expandable graphite is present in the composition in form of solid particles, wherein at least 50 %, preferably at least 60 % of the particles have a particle size of greater than the standard mesh size of 50 and/or not more than 20 %, preferably not more than 10 % of the particles have a particle size of smaller than the standard mesh size of 80.

5. The thermally expandable composition according to any one of previous claims, wherein the thermally expandable graphite has an initiation expansion temperature determined by using the method as defined in description in the range of 85 - 200°C, preferably 100 - 185°C.

6. The thermally expandable composition according to any one of previous claims, wherein the at least one solid rubber **R** comprises 5 - 40 wt.-%, preferably 7.5 - 35 wt.-% of the total weight of the thermally expandable composition.

7. The thermally expandable composition according to any one of previous claims, wherein the at least one solid rubber **R** is selected from the group consisting of butyl rubber, halogenated butyl rubber, styrene-butadiene rubber (SBR), ethylene-propylene rubber (EPR), ethylene-propylene diene monomer rubber (EPDM), natural rubber, cis-1,4-polyisoprene, and polybutadiene rubber.

8. The thermally expandable composition according to any one of previous claims, wherein the at least one tackifying resin **TR** comprises 1.5 - 30 wt.-%, preferably 2.5 - 25 wt.-% of the total weight of the thermally expandable composition.

9. The thermally expandable composition according to any one of previous claims, wherein the vulcanization system **VS** is a vulcanization system without elementary sulfur, preferably containing at least one vulcanization agent selected from the group consisting of para-quinone dioxime, para-benzoquinone dioxime, para-quinone dioxime dibenzoate, tetramethyl thiuram disulfide (TMTD), and tetrabenzylthiuram disulfide (TBzTD) and preferably further containing at least one organic vulcanization accelerator and/or at least one inorganic vulcanization accelerator.

10. A welding sealer tape comprising a substrate layer composed of the thermally expandable composition according to any one of claims 1-9, wherein the substrate layer preferably has a thickness in the range of 0.1 - 5 mm, preferably 0.25 - 3.5 mm and/or a width in the range of 5 - 350 mm, preferably 5 - 250 mm.

11. A method for providing sealing, structural adhesion, baffling, or combination thereof to a structure of a manufactured article, preferably an automotive vehicle, the method comprising steps of:
i) Providing a welding sealer tape according to claim 10 between a first member and a second member of the structure, both first and second members having outwardly and inwardly facing surfaces,
ii) Forming a weld connecting the first member to the second member such that at least a portion of the thermally expandable composition is displaced, and
iii) Activating the thermally expandable composition such that the composition cures and/or expands.

12. A baffle and/or reinforcing element for open or hollow structures, wherein the element comprises the thermally expandable composition according to any one of claims 1-9.

13. The baffle and/or reinforcing element according to claim 12, wherein the thermally expandable composition has a sheet-like structure, preferably having a thickness in the range of 0.5 - 10 mm, preferably 1 - 7.5 mm and/or a length in the range of 5 - 30 cm, preferably 10 - 25 cm and/or a width in the range of 1 - 30 cm, preferably 2-20 cm.

14. A method for sealing, baffling and/or reinforcing a cavity or hollow structure, wherein the baffle and/or reinforcing element according to claim 12 or 13 is introduced into said cavity or hollow structure and subsequently thermally expanded such that said cavity or hollow structure is at least partially filled by the expanded composition.

15. Use of a thermally expandable graphite as a blowing agent in a thermally expandable material.

16. The use according to claim 15, wherein the thermally expandable graphite comprises 0.5 - 35 wt.-% wt.-%, preferably 1.5 - 30 wt.-% of the total weight of the thermally expandable material and/or wherein the thermally expandable material comprises at least one solid rubber, at least one tackifying resin, and a curing system.

17. The use according to claim 16, wherein the at least one solid rubber comprises 5 - 40 wt.-%, preferably 7.5 - 35 wt.-% of the total weight of the thermally expandable material and/or the at least one tackifying resin comprises 0.5 - 30 wt.-%, preferably 2.5 - 25 wt.-%, of the total weight of the thermally expandable material.
